# FASCICULE DE BREVET EUROPEEN

(11) **EP 4 422 962 B1**
(45) Date de publication et mention de la délivrance du brevet: **29.10.2025**
(21) Numéro de dépôt: 22789964.8
(22) Date de dépôt: 27.09.2022
(51) Int. Cl.: B62D 25/20

(54) **VÉHICULE AUTOMOBILE AVEC TRAVERSE D'ASSISE SUR BATTERIES DE TRACTION**
KRAFTFAHRZEUG MIT SITZQUERTRÄGER AN TRAKTIONSBATTERIEN
MOTOR VEHICLE WITH SEAT CROSSMEMBER ON TRACTION BATTERIES

(30) Priorité: 28.10.2021 FR 2111445
(43) Date de publication de la demande: 04.09.2024
(73) Titulaire: Stellantis Auto SAS, 78300 Poissy (FR)
(72) Inventeur: MATHE, Bruno, 91680 BRUYERES LE CHATEL (FR); PERU, Marc, 92290 CHATENAY MALABRY (FR); BOISGARD, Vincent, 37540 ST CYR SUR LOIRE (FR); JAUMONT, Patrick, 94400 VITRY SUR SEINE (FR); PICQUET, Christophe, 78000 VERSAILLES (FR)
(74) Mandataire: BCIP
(86) Numéro de dépôt international: PCT/FR2022/051812
(87) Numéro de publication internationale: WO 2023/073295

(56) Documents cités:
- WO-A2-2012/010770
- CN-U- 207 670 508
- JP-A- 2008 174 181

## Description

### Domaine technique

La présente invention revendique la priorité de la demande française 2111445 déposée le 28 octobre 2021.

La présente invention concerne le domaine des véhicules automobiles, plus particulièrement le domaine de la structure de véhicules automobiles.

### Technique antérieure

La capacité d'un véhicule automobile à assurer la sécurité de ses occupants en cas de collision est évaluée par des tests de collision suivant différents protocoles déterminés par différents organismes comme notamment l'Euro NCAP, acronyme de « European New Car Assessment Program », un organisme international indépendant basé à Bruxelles en Belgique.

Parmi les différents protocoles de collision, on compte le protocole de choc latéral contre un poteau vertical, afin qu'un véhicule résiste au choc d'un tel protocole, celui-ci dispose d'une structure comportant des traverses d'assise sur lesquelles se fixent les sièges du véhicule et agissent également comme voie d'effort pour absorber l'énergie du choc latéral par déformation de ladite traverse d'assise.

Sur les dernières plateformes des véhicules automobiles comportant un bac pour accumulateurs d'énergie électrique de traction, couramment désigné bac batteries, la présence dudit bac requiert le rehaussement d'une partie du plancher, cela impose une adaptation de la forme géométrique de la traverse d'assise. En effet, le bac batterie se situe en dessous de la partie centrale de la traverse d'assise imposant ainsi, la création d'une encoche centrale dans la partie inférieure de la traverse d'assise et suivant une direction longitudinale de la traverse, entre les deux embouts qui assurent la liaison rigide aux deux longerons du véhicule, pendant que la partie supérieure reste rectiligne, cela se traduit par une partie centrale de la traverse d'assise ayant une plus petite section que ses deux embouts.

Dans cette configuration, la traverse d'assise ne permet pas d'avoir des résultats satisfaisants lors des protocoles de choc latéral, car l'encoche de la partie centrale représente une zone faible et compromet toute l'inertie de la traverse (rupture d'inertie) quelle que soit son épaisseur, alors que la partie extérieure rectiligne de la traverse reste rigide et ne permet pas d'absorber l'énergie du choc latéral par consommation de matière.

Les véhicules thermiques conventionnels disposent de traverses d'assise ayant une section constante sur toute la longueur, ce qui leur permet de plus facilement obtenir des résultats satisfaisants lors des protocoles de choc latéral.

Satisfaire ces protocoles de collision, en particulier sur les véhicules à traction électrique équipés de batterie de traction particulièrement lourdes, impose des mesures de renforcement de la structure du véhicule, pouvant conduire à du surpoids et des surcoûts de fabrication, généralement indésirables. En effet, une solution au problème consiste à surélever l'intégralité du plancher afin de garantir une section quasi-constante sur toute la longueur de la traverse d'assise, mais la hauteur globale du véhicule est également augmentée, ce qui pénalise le coefficient de traînée SCx résultant ainsi par une augmentation de la consommation et de la masse globale du véhicule.

L'utilisation d'une batterie de taille réduite permet de modifier la disposition des traverses sur le plancher, pour par exemple, les agencer en croix, cela constitue un autre moyen permettant aux véhicules électriques d'obtenir des résultats favorables aux protocoles de choc latéral. Cependant, l'utilisation de batteries de taille réduite a pour conséquence de limiter l'autonomie globale du véhicule.

Le document CN 211281221 U décrit une traverse d'assise comprenant des nervures disposées à ses deux extrémités. Cependant, ce document ne divulgue pas une solution permettant d'améliorer les résultats aux protocoles de choc latéral et adaptée aux véhicules à traction électrique.

Les documents WO2012010770, JP2008174181 et CN207670508 décrivent des structures de plancher de véhicule comprenant une traverse transversale

### Exposé de l'invention

La présente invention a pour objectif de pallier au moins un des inconvénients de l'état de la technique susmentionné. Plus particulièrement, l'invention a pour objectif d'améliorer le comportement d'un véhicule automobile à traction électrique aux protocoles de collision latérale, et ce de manière économique et sans ajout de poids significatif.

À cet effet, l'invention a pour objet un véhicule automobile comprenant deux longerons latéraux, un plancher disposé entre les deux longerons latéraux, ledit plancher comprend une zone surélevée formant deux épaulements en vis-à-vis des deux longerons latéraux, respectivement ; au moins une traverse d'assise comprenant une poutre s'étendant sur la zone surélevée du plancher, et un embout fixé à chaque extrémité de la poutre et fixé au plancher entre la zone surélevée et un des deux longerons latéraux ; remarquable en ce que chaque embout comprend une paroi horizontale recouvrant l'épaulement correspondant et la poutre présente une section transversale avec deux ailes horizontales fixées contre une face supérieure de la zone surélevée et les parois horizontales.

Dans cette configuration, la zone surélevée formant les deux épaulements est due à la présence d'un bac batteries en-dessous du plancher.

Avantageusement, la paroi horizontale est rigidement liée à la face supérieure de la zone surélevée du plancher.

Selon un mode de réalisation, la poutre comprend au moins une nervure s'étendant sur toute la zone surélevée et sur les embouts.

Selon un mode de réalisation, la section transversale de la poutre est en forme de U inversé avec une paroi horizontale et deux parois latérales, les deux ailes horizontales étant des prolongements desdites deux parois latérales.

Selon un mode de réalisation, l'au moins une nervure forme au moins un creux sur une face supérieure de la paroi horizontale de la poutre.

Selon un mode de réalisation, l'au moins une traverse comprend une poutre complémentaire de section transversale en U inversé disposée par-dessus et chaussant la poutre.

Selon un mode de réalisation, la poutre comprend, à chaque extrémité adjacente à un des deux longerons latéraux, une moulure longitudinale par rapport au véhicule automobile.

Selon un mode de réalisation, chaque embout est un embouti de section transversale en U inversé avec deux parois latérales de part et d'autre de la paroi horizontale, chacune desdites deux parois latérales comprend un bord intérieur en vis-à-vis de l'épaulement correspondant et incliné par rapport audit épaulement.

Selon un mode de réalisation, l'inclinaison des bords intérieurs des parois latérales des embouts est telle qu'une portion inférieure de chacun desdits bords intérieurs est davantage distant de l'épaulement correspondant qu'une portion supérieure dudit bord intérieur.

Selon un mode de réalisation, chaque embout est un embouti de section transversale en U inversé avec deux parois latérales de part et d'autre de la paroi horizontale, chacune desdites deux parois latérales comprenant un bord intérieur en vis-à-vis de l'épaulement correspondant et au moins une moulure verticale. Chaque bord intérieur est avantageusement parallèle à l'épaulement correspondant.

Selon un mode de réalisation, chacun des deux embouts comprend au moins deux pattes horizontales fixées au plancher et au moins deux pattes fixées au longeron latéral correspondant.

### Brève description des dessins

[Fig 1] représente une vue partielle en perspective d'une structure de véhicule à traction électrique ainsi qu'une vue en coupe réalisée transversalement au véhicule ;
[Fig 2] représente une vue en perspective d'un véhicule automobile comprenant une traverse d'assise selon un premier mode de réalisation de l'invention ;
[Fig 3] est une vue éclatée en perspective de la traverse d'assise selon le premier mode de réalisation de l'invention ;
[Fig 4] représente une vue en perspective d'un véhicule automobile comprenant une traverse d'assise selon un deuxième mode de réalisation de l'invention ;
[Fig 5] représente une vue en perspective d'une poutre de traverse d'assise selon un troisième mode de réalisation de l'invention ;
[Fig 6] représente en deux vues latérales le comportement de la traverse d'assise selon l'état de l'art, et de la traverse d'assise selon l'invention lors d'un protocole de choc latéral ;

### Description détaillée

Dans la présente description, les notions de « transversal » et « longitudinal », en relation avec des coupes, se réfère à la direction principale de l'objet dont il est question. Une coupe transversale d'une poutre transversale au véhicule automobile est alors longitudinale par rapport au véhicule automobile.

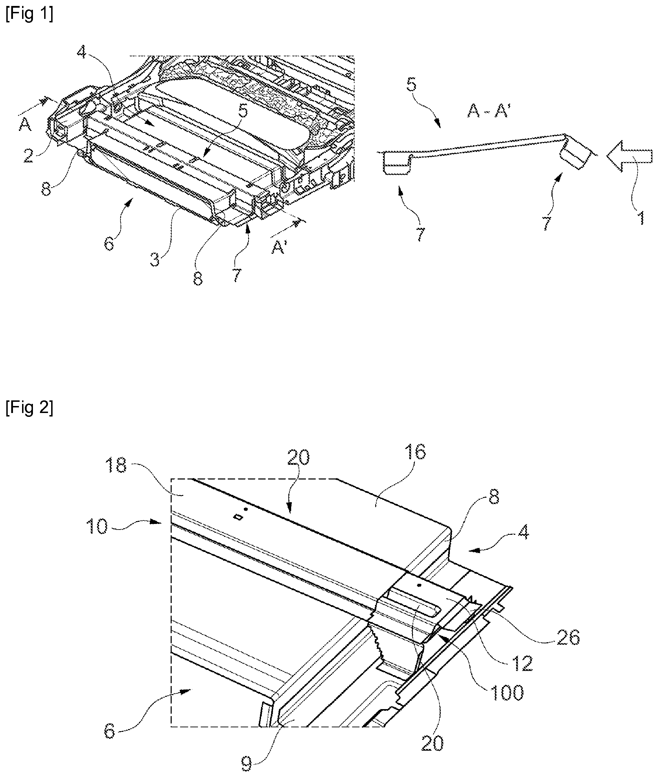

La figure 1 représente au niveau de sa partie gauche une vue partielle en perspective d'une structure de véhicule à traction électrique comprenant une traverse 5, selon l'état de l'art.

En référence à la partie gauche de la figure 1, la structure du véhicule à traction électrique comprend deux longerons latéraux 2 et un plancher 4 disposé entre les deux longerons latéraux 2, le plancher 4 comprend une zone surélevée 6 permettant l'intégration d'un bac pour accumulateurs d'énergie électrique de traction 3, la zone surélevée 6 forme deux épaulements 8 qui sont en vis-à-vis des deux longerons latéraux 2, respectivement.

La structure du véhicule dispose d'au moins une traverse d'assise 5 selon l'état de l'art comprenant une poutre s'étendant sur la zone surélevée 6 du plancher 4, et un embout 7 fixé à chaque extrémité de la poutre et fixé au plancher 4 entre la zone surélevée 6 et un des deux longerons latéraux 2.

La partie droite de la figure 1 est une vue en coupe de la partie gauche de la figure 1 suivant une section longitudinale A-A', montrant la déformation de la traverse lors d'un protocole de choc latéral.

En référence à la partie droite de la figure 1, la traverse d'assise 5 comprend une poutre destinée à s'étendre sur la zone surélevée du plancher, et comprend également deux encoches disposées entre la poutre et l'embout 7. Dans cette configuration, un effort 1 appliqué au véhicule lors du protocole de choc latéral cause une rupture d'inertie transmise, notamment au niveau de l'encoche, ce qui empêche le comportement optimal de la traverse 5 lors du protocole. En effet, la traverse 5 subit une mauvaise chronologie de déformation, car l'embout 7 reste rigide.

Les figures 2 à 4 illustrent au moins une traverse d'assise 10 selon deux modes de réalisation différents.

De manière générale, la traverse d'assise est symétrique suivant un plan longitudinal vertical et central du véhicule, de ce fait, la description d'un embout ou d'une extrémité de la traverse d'assise concernera systématiquement le deuxième embout appartenant à la même traverse d'assise.

La figure 2 représente une vue en perspective de l'au moins une traverse d'assise 10 selon un premier mode de réalisation de l'invention fixée sur le plancher 4 du véhicule automobile. La traverse d'assise 10 comprend une poutre 12 s'étendant sur la zone surélevée 6 du plancher 4, et un embout 100 fixé à chaque extrémité de la poutre 12 et également fixé au plancher 4 entre la zone surélevée 6 et un des deux longerons latéraux.

Dans cette configuration, la zone surélevée 6 formant les deux épaulements 6 est due à la présence d'un bac batteries en-dessous du plancher 4. De préférence le bac batterie a une largeur d'au moins 600 mm et une profondeur d'au moins 50 mm.

La poutre 12 est de préférence en acier DP590, acronyme du nom anglais « Dual Phase », c'est un acier constitué d'une phase martensitique (dure) dispersée dans une matrice ferritique (ductile), l'acier DP est caractérisé par une tenue à la fatigue et une capacité d'absorption d'énergie qui le prédispose à des pièces de structure de carrosserie automobile, la poutre 12 a une épaisseur de 1,9 mm et/ou 2 mm.

De préférence, l'épaulement 8 peut comprendre au moins un renfort 9 en équerre qui peut assurer une rigidité de ses bords supérieur et/ou inférieur. Le renfort peut être en acier DP780, acronyme du nom anglais « Dual Phase », ayant une épaisseur de 0,7 mm.

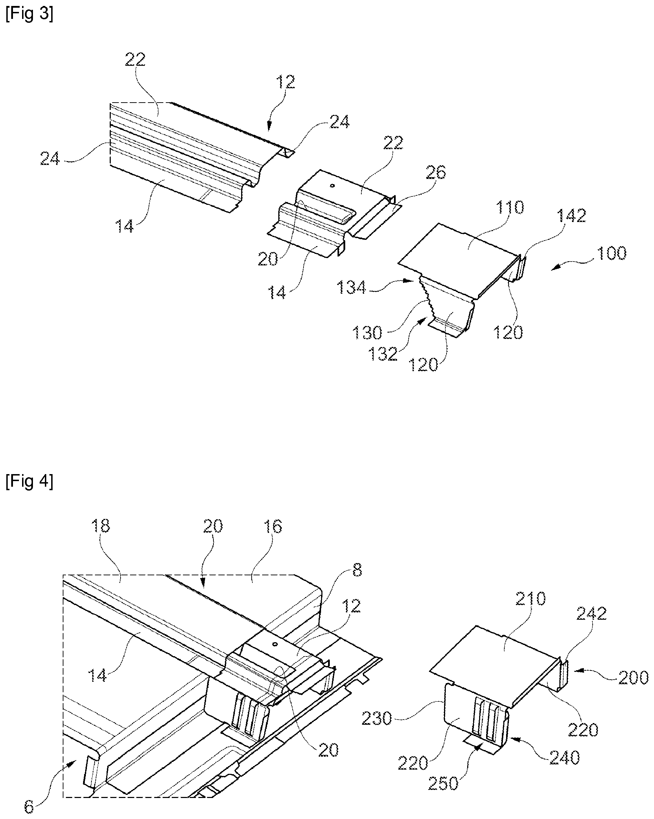

La figure 3 est une vue éclatée et en perspective de quelques éléments de la traverse d'assise 10 selon le premier mode de réalisation de l'invention.

En référence aux figures 2 et 3, chaque embout 100 comprend une paroi horizontale 110 recouvrant l'épaulement 8 correspondant et la poutre 12 présente une section transversale avec deux ailes horizontales 14 fixées contre une face supérieure 16 de la zone surélevée 6 et les parois horizontales 110. Avantageusement, les ailes horizontales 14 sont prolongées transversalement jusqu'aux deux longerons, cela permet de supprimer l'encoche de la traverse d'assise 5 située entre la poutre et l'embout 7.

De préférence, l'embout 100 est une pièce emboutie à partir d'une plaque d'acier E275D, c'est un acier doux caractérisé par sa facilité à être soudé et par son faible coût, l'embout 100 a une épaisseur d'au moins 0,7 mm.

La fixation de l'embout 100 sur le plancher 4 est assurée par la liaison rigide directe d'une extrémité de la paroi horizontale 110 sur la face supérieure 16 de la zone surélevée 6. À cet égard, les moyens de fixation de la paroi horizontale 110 à la face supérieure 16 sont formés par soudure, par exemple par un ou plusieurs cordons de soudure et/ou par des points de soudure à résistance électrique.

De façon avantageuse, la soudure de l'embout 100 sur le plancher 4 permet d'assurer la continuité et la tenue de la section de la traverse d'assise 10 lors d'un choc latéral.

Selon le premier mode de réalisation de l'invention, la section transversale de la poutre 12 est en forme de U inversé avec une paroi horizontale 22 et deux parois latérales 24, les deux ailes horizontales 14 étant des prolongements des deux parois latérales 24.

La poutre 12 comprend au moins une nervure 20 s'étendant sur toute la zone surélevée 6 et sur les deux embouts 100, la nervure 20 forme au moins un creux sur une face supérieure de la paroi horizontale 22.

De préférence, la nervure 20 est progressive suivant la direction transversale. Avantageusement, la progressivité de la nervure 20 permet d'augmenter l'inertie lors du protocole de choc latéral. De ce fait, l'augmentation d'inertie de la nervure 20 peut atteindre les 150%.

La traverse d'assise 10 comprend une poutre complémentaire 18 de section transversale en U inversé disposée par-dessus et chaussant la poutre 12. De façon avantageuse, la poutre complémentaire contribue au renforcement de la traverse 10 et donc à l'amélioration de son comportement lors d'un choc latéral.

La poutre complémentaire 18 est de préférence en acier DP780 ayant une épaisseur d'au moins 1 mm.

La poutre 12 comprend, à chaque extrémité adjacente à un des deux longerons latéraux, une patte longitudinale 26 lui permettant d'être directement fixée au longeron. À cet égard, les moyens de fixation de la patte longitudinale 26 au longeron sont formés par soudure.

Chaque embout 100 est un embouti de section transversale en U inversé avec deux parois latérales 120 de part et d'autre de la paroi horizontale 110, chacune des deux parois latérales 120 comprend un bord intérieur 130 en vis-à-vis de l'épaulement 8 correspondant et incliné par rapport à lui.

Les deux bords intérieurs 130 des deux parois latérales 120 de chaque embout 100 comprennent une portion inférieure 132 et une portion supérieure 134. L'inclinaison des bords intérieurs 130 est telle que la portion inférieure 132 est davantage distante de l'épaulement 8 correspondant en comparaison à la portion supérieure 134.

De façon avantageuse, lors du protocole de choc latéral, l'inclinaison des bords intérieurs 130 de l'embout 100 empêche toute transmission d'effort parasite au plancher 4 via l'épaulement 8, ce dernier reste ainsi intact lors du choc latéral.

L'embout 100 comprend des bords extérieurs 140 ayant des pattes 142 lui permettant d'être directement fixé au longeron. À cet effet, la fixation est de préférence réalisée par soudure. L'embout 100 comprend également au moins deux pattes horizontales fixées sur le plancher 4.

La figure 4 représente une vue en perspective de la traverse d'assise 10 selon un deuxième mode de réalisation de l'invention fixée sur le plancher 4 du véhicule automobile.

La différence entre le premier et le deuxième mode de réalisation de l'invention concerne uniquement l'embout utilisé, en effet, le deuxième mode de réalisation comprend la même poutre 12 que le premier mode de réalisation, elle s'étend sur la zone surélevée 6 du plancher 4.

En référence à la figure 4, la traverse d'assise comprend un embout 200 fixé à chaque extrémité de la poutre 12 et également fixé au plancher 4 entre la zone surélevée 6 et un des deux longerons latéraux.

Selon le deuxième mode de réalisation, la traverse d'assise 10 comprend la poutre complémentaire 18 de section transversale en U inversé disposée par-dessus et chaussant la poutre 12. De façon avantageuse, la poutre complémentaire 18 contribue au renforcement de la traverse 10 et donc à l'amélioration de son comportement lors du choc latéral.

Chaque embout 200 comprend une paroi horizontale 210 recouvrant l'épaulement 8 correspondant et la poutre 12 présente une section transversale avec deux ailes horizontales 14 fixées contre la face supérieure 16 de la zone surélevée 6 et les parois horizontales 210. Avantageusement, les ailes horizontales 14 sont prolongées transversalement jusqu'aux deux longerons, cela permet de supprimer l'encoche de la traverse d'assise 5 située entre la poutre et l'embout 7.

La fixation de l'embout 200 sur le plancher 4 est assurée par la liaison rigide directe d'une extrémité de la paroi horizontale 210 sur la face supérieure 16 de la zone surélevée 6. À cet égard, les moyens de fixation de la paroi horizontale 210 à la face supérieure 16 sont formés par soudure.

De façon avantageuse, la soudure de l'embout 200 sur le plancher 4 permet d'assurer la continuité et la tenue de la section de la traverse d'assise 10 lors du choc latéral.

L'embout 200 est un embouti de section transversale en U inversé avec deux parois latérales 220 de part et d'autre de la paroi horizontale 210, chacune des deux parois latérales 220 comprenant un bord intérieur 230 en vis-à-vis de l'épaulement correspondant. De plus, les parois latérales 220 comprennent au moins une moulure verticale 250.

L'au moins une moulure verticale 250 permet de façon avantageuse une amélioration de l'ordre de 50% de la compression de l'embout 200 correspondant, cela permet d'amorcer la déformation programmée de l'embout 200 lors du protocole de choc latéral. Préférentiellement, chaque paroi latérale 220 de l'embout 200 comprend deux moulures verticales ayant une largeur de 25 mm et une profondeur de 7 mm.

L'embout 200 comprend des bords extérieurs 240 ayant des pattes 242 lui permettant d'être directement fixé au longeron. À cet effet, la fixation est de préférence réalisée par soudure. L'embout 200 comprend également au moins deux pattes horizontales fixées sur le plancher 4.

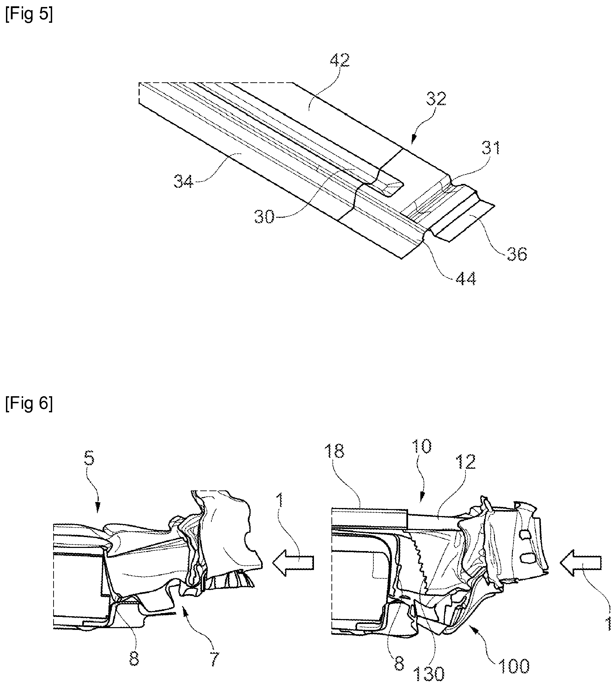

La figure 5 illustre une poutre de la traverse d'assise selon un troisième mode de réalisation de l'invention, celui-ci consiste à utiliser une poutre 32 avec l'embout 100 et en remplacement de la poutre 12 du premier mode de réalisation de l'invention, ou avec l'embout 200 en remplacement de la poutre 12 du deuxième mode de réalisation de l'invention.

Selon le troisième mode de réalisation de l'invention, la traverse d'assise comprend la poutre 32 s'étendant sur la zone surélevée du plancher, la poutre ayant une extrémité 300 fixée au plancher entre la zone surélevée et un des deux longerons latéraux.

La poutre 32 présente une section transversale avec deux ailes horizontales 34 fixées contre une face supérieure de la zone surélevée et les parois horizontales appartenant à un des embouts selon les modes de réalisation précédemment décrits. Préférentiellement, les ailes horizontales 34 sont prolongées transversalement jusqu'aux deux longerons.

La section transversale de la poutre 32 est en forme de U inversé avec une paroi horizontale 42 et deux parois latérales 44, les deux ailes horizontales 34 étant des prolongements des deux parois latérales 44.

La poutre 32 comprend au moins une première nervure 30 sur toute la zone surélevée et sur les deux embouts de la traverse, la première nervure 30 forme au moins un creux sur une face supérieure de la paroi horizontale 42.

De préférence, la première nervure 30 est progressive suivant la direction transversale. Avantageusement, la progressivité de la première nervure 30 permet d'augmenter l'inertie lors du protocole de choc latéral.

Dans cette configuration, la poutre 32 comprend également au moins une deuxième nervure 31 disposée longitudinalement sur l'extrémité 300 fixée au plancher entre la zone surélevée et un des deux longerons latéraux, la deuxième nervure 31 forme au moins un creux sur la face supérieure de la paroi horizontale 42.

Préférentiellement, la deuxième nervure 31 a une largeur de 40 mm et une profondeur allant de 7 mm à 10 mm.

Selon le troisième mode de réalisation de l'invention, la traverse d'assise comprend la poutre complémentaire de section transversale en U inversé disposée par-dessus et chaussant la poutre 32. De façon avantageuse, la poutre complémentaire contribue au renforcement de la traverse et donc à l'amélioration de son comportement lors du choc latéral.

La poutre 32 comprend, à chaque extrémité 300 adjacente à un des deux longerons latéraux, une moulure longitudinale 36 lui permettant d'être directement fixée au longeron. À cet égard, les moyens de fixation de la moulure longitudinale 36 au longeron sont formés par soudure.

La figure 6 représente deux vues latérales illustrant le comportement dynamique à t = 35 ms lors du protocole de choc latéral de la traverse d'assise 5 selon l'état de l'art, et la traverse d'assise 10 selon le premier mode de réalisation de l'invention.

En référence à la partie gauche de la figure 6, l'effort 1 appliqué au véhicule lors du protocole de choc latéral cause une rupture d'inertie, notamment au niveau de l'encoche où la traverse 5 plie avant la déformation de son embout 7, ce qui est considéré comme étant une mauvaise exploitation de la traverse d'assise, car celle-ci subit une mauvaise chronologie de déformation.

Dans cette configuration, ce qui empêche la traverse 5 d'avoir un comportement optimal lors du protocole de choc latéral, c'est l'embout 7 qui reste rigide, cela est en partie causé par les bords de l'embout 7 qui sont en regard de l'épaulement 8, en effet, lors du choc latéral, les bords de l'embout 7 viennent en contact direct avec l'épaulement 8, cependant, le contact est rectiligne ne constituant aucun point fragilisant pour l'embout 7.

En référence à la partie droite de la figure 6, et lors du contact des deux bords inclinés 130 avec l'épaulement correspondant 8, l'inclinaison des bords 130 leur permet de provoquer une déformation programmée. Parallèlement, la nervure 20 permet d'augmenter de 150% l'inertie de la poutre 12, on observe alors un comportement de la traverse plus stable avec une chronologie de déformation conforme car elle est progressive, l'inertie est donc transmise progressivement de l'embout 100 à la poutre 12 ainsi qu'à la poutre complémentaire 18.

Parallèlement, le comportement de la traverse d'assise 10 tel qu'illustrée dans la partie droite de la figure 6, est similaire au comportement de la traverse d'assise 10 selon le deuxième mode de réalisation de l'invention comprenant l'embout 200. Dans cette configuration, l'inertie est améliorée principalement au moyen de la nervure 30 et la déformation programmée est procurée par l'au moins une moulure verticale 250, on observe donc un comportement de la traverse plus stable avec une chronologie de déformation conforme car elle est progressive, l'inertie est alors progressivement transmise de l'embout 200 à la poutre 12 ainsi qu'à la poutre complémentaire 18.

L'invention selon l'un des trois modes de réalisation décrits, permet d'assurer une meilleure gestion d'inertie sur l'au moins une traverse d'assise de véhicule automobile, particulièrement lors du choc latéral, comparé à la traverse d'assise de l'art antérieur, cette amélioration est principalement due à une chronologie de déformation progressive procurée par les caractéristiques techniques de la traverse d'assise selon l'invention.

De façon avantageuse, l'amélioration de la gestion d'inertie de la traverse d'assise qu'apporte la présente invention, est assurée sans aucun ajout de masse au véhicule automobile. En effet, les épaisseurs des tôles métalliques constituant la traverse d'assise de la présente invention restent inchangées par rapport aux épaisseurs des tôles constituant la traverse d'assise de l'art antérieur.

Cette proposition d'invention permet d'améliorer le rendement d'efficacité de passage d'effort par la structure du véhicule, ceci tout en évitant de devoir la renforcer de façon conventionnelle (surdimensionnement de la structure), avantageusement, il en résultera des gains d'allègement pour toutes les structures des véhicules comportant au moins une traverse d'assise selon l'invention.

## Revendications

1. Véhicule automobile comprenant :
- deux longerons latéraux (2) ;
- un plancher (4) disposé entre les deux longerons latéraux (2), ledit plancher (4) comprend une zone surélevée (6) formant deux épaulements (8) en vis-à-vis des deux longerons latéraux (2), respectivement ;
- au moins une traverse d'assise (10) comprenant une poutre (12) s'étendant sur la zone surélevée (6) du plancher, et un embout (100, 200) fixé à chaque extrémité de la poutre (12) et fixé au plancher (4) entre la zone surélevée (6) et un des deux longerons latéraux (2) ;
**caractérisé en ce que**
chaque embout (100, 200) comprend une paroi horizontale (110, 210) recouvrant l'épaulement (8) correspondant et la poutre (12) présente une section transversale avec deux ailes horizontales (14) fixées contre une face supérieure (16) de la zone surélevée (6) et les parois horizontales (110, 210).

2. Véhicule automobile selon la revendication 1, dans lequel la poutre (12) comprend au moins une nervure (20) s'étendant sur toute la zone surélevée (6) et sur les embouts (100, 200).

3. Véhicule automobile selon l'une des revendications 1 et 2, dans lequel la section transversale de la poutre (12) est en forme de U inversé avec une paroi horizontale (22) et deux parois latérales (24), les deux ailes horizontales (14) étant des prolongements desdites deux parois latérales (24).

4. Véhicule automobile selon les revendications 2 et 3, dans lequel l'au moins une nervure (20) forme au moins un creux sur une face supérieure de la paroi horizontale (22) de la poutre (12).

5. Véhicule automobile selon la revendication 4, dans lequel l'au moins une traverse (10) comprend une poutre complémentaire (18) de section transversale en U inversé disposée par-dessus et chaussant la poutre (12).

6. Véhicule automobile selon l'une des revendications 1 à 5, dans lequel la poutre (12) comprend, à chaque extrémité adjacente à un des deux longerons latéraux (2), une patte longitudinale (26).

7. Véhicule automobile selon l'une des revendications 1 à 5, dans lequel chaque embout (100) est un embouti de section transversale en U inversé avec deux parois latérales (120) de part et d'autre de la paroi horizontale (110), chacune desdites deux parois latérales (120) comprend un bord intérieur (130) en vis-à-vis de l'épaulement (8) correspondant et incliné par rapport audit épaulement (8).

8. Véhicule automobile selon la revendication 7, dans lequel l'inclinaison des bords intérieurs (130) des parois latérales (120) des embouts (100) est telle qu'une portion inférieure (132) de chacun desdits bords intérieurs (130) est davantage distant de l'épaulement (8) correspondant qu'une portion supérieure (134) dudit bord intérieur (130).

9. Véhicule automobile selon l'une des revendications 1 à 6, dans lequel chaque embout (200) est un embouti de section transversale en U inversé avec deux parois latérales (220) de part et d'autre de la paroi horizontale (210), chacune desdites deux parois latérales (220) comprenant un bord intérieur (230) en vis-à-vis de l'épaulement (8) correspondant et au moins une moulure verticale (250).

10. Véhicule automobile selon l'une des revendications 1 à 9, dans lequel chacun des deux embouts (100, 200) comprend au moins deux pattes horizontales fixées au plancher et au moins deux pattes (142, 242) fixées au longeron latéral correspondant (2).

## Patentansprüche

1. Kraftfahrzeug mit:
- zwei Seitenholme (2);
- einen Boden (4), der zwischen den beiden Seitenholmen (2) angeordnet ist, wobei der Boden (4) einen erhabenen Bereich (6) aufweist, der zwei Schultern (8) gegenüber den beiden Seitenholmen (2) bildet;
- wenigstens ein Sitzquerträger (10), der einen sich über den erhöhten Bereich (6) des Bodens erstreckenden Balken (12) und ein an jedem Ende des Balkens (12) befestigtes und zwischen dem erhöhten Bereich (6) und einem der beiden Seitenholme (2) am Boden (4) befestigtes Endstück (100, 200) umfasst;
**dadurch gekennzeichnet, dass**
Jeder Ansatz (100, 200) umfasst eine horizontale Wand (110, 210), die die entsprechende Schulter (8) abdeckt, und der Balken (12) hat einen Querschnitt mit zwei horizontalen Schenkeln (14), die an einer Oberseite (16) des erhöhten Bereichs (6) und den horizontalen Wänden (110, 210) befestigt sind.

2. Kraftfahrzeug nach Anspruch 1, wobei der Träger (12) mindestens eine Rippe (20) aufweist, die sich über den gesamten erhöhten Bereich (6) und über die Ansätze (100, 200) erstreckt.

3. Kraftfahrzeug nach einem der Ansprüche 1 und 2, bei dem der Querschnitt des Trägers (12) die Form eines umgekehrten U mit einer horizontalen Wand (22) und zwei Seitenwänden (24) hat, wobei die beiden horizontalen Flügel (14) Verlängerungen der beiden Seitenwände (24) sind.

4. Kraftfahrzeug nach Anspruch 2 und 3, wobei die mindestens eine Rippe (20) mindestens eine Vertiefung auf einer Oberseite der horizontalen Wand (22) des Trägers (12) bildet.

5. Kraftfahrzeug nach Anspruch 4, bei dem der wenigstens eine Querträger (10) einen komplementären Träger (18) mit umgekehrtem U-Querschnitt umfasst, der über dem Träger (12) angeordnet ist und diesen aufzieht.

6. Kraftfahrzeug nach einem der Ansprüche 1 bis 5, wobei der Träger (12) an jedem Ende, das einem der beiden Seitenholme (2) benachbart ist, eine Längslasche (26) aufweist.

7. Kraftfahrzeug nach einem der Ansprüche 1 bis 5, bei dem jeder Ansatz (100) ein umgekehrter U-förmiger Querschnittsstutzen mit zwei Seitenwänden (120) auf beiden Seiten der horizontalen Wand (110) ist, wobei jede der beiden Seitenwände (120) einen inneren Rand (130) aufweist, der der entsprechenden Schulter (8) gegenüberliegt und in Bezug auf die Schulter (8) geneigt ist.

8. Kraftfahrzeug nach Anspruch 7, wobei die Neigung der inneren Kanten (130) der Seitenwände (120) der Endkappen (100) derart ist, dass ein unterer Abschnitt (132) jeder der inneren Kanten (130) weiter von der entsprechenden Schulter (8) entfernt ist als ein oberer Abschnitt (134) der inneren Kante (130).

9. Kraftfahrzeug nach einem der Ansprüche 1 bis 6, bei dem jeder Ansatz (200) ein umgekehrter U-förmiger Querschnittsstutzen mit zwei Seitenwänden (220) auf beiden Seiten der horizontalen Wand (210) ist, wobei jede der beiden Seitenwände (220) einen Innenrand (230) gegenüber der entsprechenden Schulter (8) und mindestens eine vertikale Sicke (250) aufweist.

10. Kraftfahrzeug nach einem der Ansprüche 1 bis 9, bei dem jeder der beiden Ansätze (100, 200) mindestens zwei horizontale Laschen, die an dem Boden befestigt sind, und mindestens zwei Laschen (142, 242), die an dem entsprechenden Seitenträger (2) befestigt sind, umfasst.

## Claims

1. Motor vehicle comprising:
- two side rails (2);
a floor (4) arranged between the two lateral side rails (2), said floor (4) comprising a raised zone (6) forming two shoulders (8) facing the two lateral side rails (2), respectively;
- at least one seat cross-member (10) comprising a beam (12) extending over the raised zone (6) of the floor, and an end-piece (100, 200) fixed to each end of the beam (12) and fixed to the floor (4) between the raised zone (6) and one of the two lateral spars (2);
**characterised by**
each end piece (100, 200) comprises a horizontal wall (110, 210) covering the corresponding shoulder (8) and the beam (12) has a cross section with two horizontal wings (14) fixed against an upper face (16) of the raised zone (6) and the horizontal walls (110, 210).

2. Motor vehicle according to claim 1, in which the beam (12) comprises at least one rib (20) extending over the entire raised zone (6) and over the end pieces (100, 200).

3. Motor vehicle according to one of Claims 1 and 2, in which the cross-section of the beam (12) is in the form of an inverted U with a horizontal wall (22) and two lateral walls (24), the two horizontal wings (14) being extensions of the said two lateral walls (24).

4. Motor vehicle according to claims 2 and 3, in which the at least one rib (20) forms at least one hollow on an upper face of the horizontal wall (22) of the beam (12).

5. Motor vehicle according to claim 4, in which the at least one cross-member (10) comprises a complementary beam (18) of inverted U-shaped cross-section disposed above and fitting over the beam (12).

6. Motor vehicle according to one of Claims 1 to 5, in which the beam (12) comprises, at each end adjacent to one of the two lateral side rails (2), a longitudinal lug (26).

7. Motor vehicle according to one of Claims 1 to 5, in which each end-piece (100) is an end-piece of inverted U-shaped cross-section with two side walls (120) on either side of the horizontal wall (110), each of said two side walls (120) comprises an inner edge (130) facing the corresponding shoulder (8) and inclined by report to said shoulder (8).

8. Motor vehicle according to claim 7, in which the inclination of the inner edges (130) of the side walls (120) of the end pieces (100) is such that a lower portion (132) of each of said inner edges (130) is further away from the corresponding shoulder (8) than an upper portion (134) of said inner edge (130).

9. Motor vehicle according to one of Claims 1 to 6, in which each end-piece (200) is an end-piece of inverted U-shaped cross-section with two side walls (220) on either side of the horizontal wall (210), each of said two side walls (220) comprising an inner edge (230) facing the corresponding shoulder (8) and at least one vertical moulding (250).

10. Motor vehicle according to one of Claims 1 to 9, in which each of the two end pieces (100, 200) comprises at least two horizontal tabs fixed to the floor and at least two tabs (142, 242) fixed to the corresponding lateral spar (2).
